# EUROPEAN PATENT APPLICATION

(11) **EP 4 768 985 A1**
(43) Date of publication of application: **01.07.2026**
(21) Application number: 25227205.9
(22) Date of filing: 24.12.2025
(51) Int. Cl.: G01S 7/48, G01S 7/4863, G01S 17/10, G01S 17/931

(54) **DISTANCE MEASUREMENT METHOD, DATA PROCESSING MODULE, AND ELECTRONIC DEVICE**

(30) Priority: 27.12.2024 CN 202411984081
(71) Applicant: Suteng Innovation Technology Co., Ltd, Shenzhen City Guangdong 518000 (CN)
(72) Inventor: GONG, Changsheng, Shenzhen City (CN)
(74) Representative: Ran, Handong

(57) **Abstract**

A distance measurement method, applied to a data processing module coupled to a receiving module, includes: determining a plurality of received data based on an echo signal received by the receiving module, wherein the echo signal is reflected by a target object after a transmitting module emits a laser pulse toward the target object, and the received data are derived from an electrical signal output by the receiving module in response to the echo signal; organizing the received data into N data groups, each group comprising at least one received data, with at least two groups sharing partially identical received data, where N is an integer greater than or equal to 2; and computing a distance measurement result for each data group based on its respective received data. This method enhances distance measurement capability without requiring changes to radar hardware configuration.

## Description

### TECHNICAL FIELD

Embodiments of the present application relate to the technical field of electronic circuits, and in particular, to a distance measurement method, a data processing module, and an electronic device.

### BACKGROUND

In LiDAR systems, distance measurement capability is a critical performance indicator. To enhance this capability, methods often involve increasing the transmission power of the transmitting module or improving the detection efficiency of the receiving module. However, increasing the transmission power of the transmitting module leads to higher power consumption and increased device costs. Conversely, improving the detection efficiency of the receiving module is often constrained by limitations in device manufacturing processes and is frequently difficult to achieve.

### SUMMARY

Embodiments of the present application provide a distance measurement method, a data processing module, and an electronic device, which can enhance the distance measurement capability without altering the hardware configuration of the radar.

A first aspect of the embodiments of the present application provides a distance measurement method, applied to a data processing module, the data processing module being coupled to a receiving module, the method comprising:
determining a plurality of received data items based on an echo signal received by the receiving module, wherein the echo signal is a signal reflected by a target object after a transmitting module emits a laser pulse toward the target object, and the plurality of received data items is determined based on an electrical signal output by the receiving module in response to the echo signal;
determining N data groups based on the plurality of received data item, wherein each data group includes at least one received data item, and among the N data groups, there are two data groups having at least partially identical received data items, N being an integer greater than or equal to 2; and
determining a distance measurement result corresponding to each data group based on the received data items of each of the N data groups.

In one or more embodiments, the receiving module is a receiving array or a receiving unit; the determining a plurality of received data items based on the echo signal received by the receiving module comprises: determining the plurality of received data items based on an echo signal received by the receiving array, or determining the plurality of received data items based on a plurality of echo signals received by the receiving unit.

In one or more embodiments, the determining the plurality of received data items based on an echo signal received by the receiving array comprises: determining one received data item based on an echo signal received by each receiving unit or each receiving unit group in the receiving array, thereby determining a plurality of received data items based on the receiving array; wherein the receiving array comprises a plurality of receiving units or a plurality of receiving unit groups, and each receiving unit group comprises at least one receiving unit.

In one or more embodiments, the method further comprises: within one detection period, determining two data groups based on a plurality of received data items determined from a plurality of echo signals received by one receiving unit; configuring a number of received data items in a first data group to be A, and configuring a number of received data items in a second data group to be B, wherein both A and B are integers greater than or equal to 1, and A is not equal to B.

In one or more embodiments, the method further comprises: within one detection period, receiving each receiving unit or each receiving unit group echoes twice; configuring the receiving array such that, for a plurality of received data items corresponding to data groups determined based on a first echo of each receiving unit or each receiving unit group, a number of identical received data items shared by two data groups is C; and configuring the receiving array such that, for a plurality of received data items corresponding to data groups determined based on a second echo of each receiving unit or each receiving unit group, a number of identical received data items shared by two data groups is D; wherein C and D are integers greater than or equal to 1, and C is not equal to D.

In one or more embodiments, the determining N data groups based on the plurality of received data items comprises: determining N starting received data items from the plurality of received data items; wherein a starting received data item is a first received data item in a corresponding data group; respectively determining a number of received data items in the data group corresponding to each of the N starting received data items; determining the N data groups based on the N starting received data items and the number of received data items in the data group corresponding to each starting received data item.

In one or more embodiments, the determining a distance measurement result corresponding to each data group based on the received data items of each data group among the N data groups comprises: configuring a corresponding weighting coefficient for each received data item of each data group; and determining the distance measurement result corresponding to each data group based on a superimposed result of products of the received data items and the corresponding weighting coefficients for each data group.

In one or more embodiments, the method further comprises: adjusting a weighting coefficient corresponding to a received data item of a (K+1)-th data group based on a distance measurement result corresponding to a K-th data group, wherein K is an integer greater than or equal to 1 and less than or equal to N.

A second aspect of the embodiments of the present application provides a data processing module, comprising: at least one processor and a memory; the memory is coupled to the at least one processor, and is configured to store instructions or a program which, when executed by the at least one processor, cause the at least one processor to execute the distance measurement method as described above.

A third aspect of the embodiments of the present application provides an electronic device, comprising: a transmitting module, configured to emit a laser pulse; a receiving module, configured to determine a plurality of received data items based on an echo signal of the laser pulse; and the data processing module as described above.

A fourth aspect of the embodiments of the present application provides a computer storage medium, the computer storage medium stores instructions or a program which, when executed by at least one processor, cause the at least one processor to execute the distance measurement method as described above.

Beneficial effects of the present application are: The distance measurement method of the embodiments of the present application comprises: determining a plurality of received data items based on an echo signal received by a receiving module, wherein the echo signal is a signal reflected by a target object after a transmitting module emits a laser pulse toward the target object; determining N data groups based on the plurality of received data items, wherein each data group includes at least one received data item, and among the N data groups, there are two data groups having at least partially identical received data items, N being an integer greater than or equal to 2; determining a distance measurement result corresponding to each data group based on the received data items of each data group among the N data groups. It can be seen that, in the embodiments of the present application, during data processing, since there are two data groups having at least partially identical received data items, the density of the point cloud output by the radar can be flexibly configured or the dynamic range of the receiving unit can be enhanced by adjusting the number of identical data items in the two data groups, thereby improving the distance measurement capability of the radar.

### BRIEF DESCRIPTION OF DRAWINGS

One or more embodiments are exemplarily illustrated by the accompanying drawings. These exemplary illustrations do not constitute a limitation to the embodiments. Elements denoted by the same reference numerals in the drawings represent similar elements.
FIG. 1 is a schematic diagram of an application scenario of a LiDAR system according to an embodiment of the present application.
FIG. 2 is a first flowchart of a distance measurement method according to an embodiment of the present application.
FIG. 3 is a schematic diagram of a receiving module, received data items, and data groups according to an embodiment of the present application.
FIG. 4 is a second flowchart of a distance measurement method according to an embodiment of the present application.
FIG. 5 is a third flowchart of a distance measurement method according to an embodiment of the present application.
FIG. 6 is a schematic diagram of an implementation manner of step 202 shown in FIG. 1 according to an embodiment of the present application.
FIG. 7 is a schematic diagram of an implementation manner of step 203 shown in FIG. 1 according to an embodiment of the present application.
FIG. 8 is a schematic structural diagram of a data processing module according to an embodiment of the present application.

### DETAILED DESCRIPTION

To make the objectives, technical solutions, and advantages of the embodiments of the present application clearer, the technical solutions in the embodiments of the present application will be described clearly and completely below with reference to the accompanying drawings in the embodiments of the present application. Obviously, the described embodiments are only a part of the embodiments of the present application, not all of them. It should be understood that the specific embodiments described herein are only used to explain the present application and are not intended to limit the present application.

It should be noted that when an element is described as "connected" to another element, it can be directly connected to the other element, or there may be one or more intervening elements between them.

Furthermore, the technical features involved in the various embodiments of the present application described below can be combined with each other as long as they do not conflict with each other.

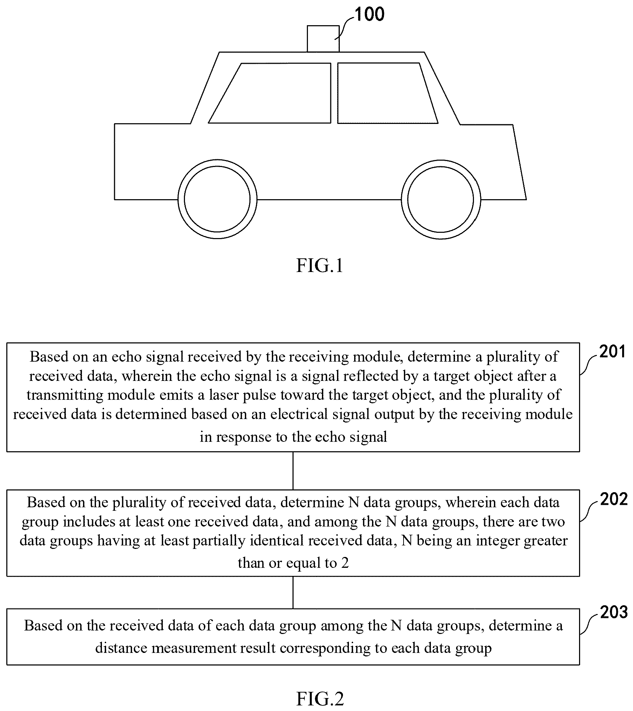

In a specific application scenario, the distance measurement method can be applied to a LiDAR system. FIG. 1 exemplarily shows a schematic diagram of an application scenario of a LiDAR system according to an embodiment of the present application. In this example, the LiDAR system 100 is installed on a vehicle, hence referred to as a vehicle-mounted LiDAR system. The LiDAR can also be installed on other mobile devices, such as mobile robots, ships, etc. The present application does not impose unique limitations on the type of mobile device.

The LiDAR can be a mechanical LiDAR, a solid-state LiDAR, a semi-solid-state LiDAR, etc. The present application does not impose unique limitations on this.

In the present application, the LiDAR includes a control module and a data processing module. The control module is used to control the LiDAR to emit detection laser light. The data processing module is used to process the echo data items received by the LiDAR and output corresponding detection data.

The control module and the data processing module can be integrated into one device or implemented separately in multiple devices. For example, they can be integrated into one device, which can specifically be an integrated circuit chip, such as a general-purpose processor, a Field Programmable Gate Array (FPGA), an Application Specific Integrated Circuit (ASIC), a System on Chip (SoC), a Network Processor (NP), a Digital Signal Processor (DSP), a Micro Controller Unit (MCU), a Programmable Logic Device (PLD), or other programmable logic devices, discrete gate or transistor logic devices, discrete hardware components, and other integrated units such as a Neural-Network Processing Unit (NPU) and a Graphics Processing Unit (GPU). It may also include an Application Processor (AP), a modem processor, an Image Signal Processor (ISP), and/or a baseband processor, etc., without specific limitation.

Please refer to FIG. 2, which is a flowchart of a distance measurement method according to an embodiment of the present application. The distance measurement method is applied to a data processing module of a sensor, where the sensor can be a LiDAR. The data processing module is coupled to a receiving module. The data processing module is responsible for processing the received raw data (in this embodiment, the received data output by the receiving module) to extract useful information, such as the distance to a target object. It can be understood that the data processing module can be integrated into the sensor or located outside the sensor. As shown in FIG. 2, the distance measurement method includes the following steps:

Step 201: Based on an echo signal received by the receiving module, determine a plurality of received data items, wherein the echo signal is a signal reflected by a target object after a transmitting module emits a laser pulse toward the target object, and the plurality of received data items is determined based on an electrical signal output by the receiving module in response to the echo signal.

It can be understood that this method is applied to the data processing module of a LiDAR. The LiDAR includes a transmitting module and a receiving module. The transmitting module is used to emit a detection signal, and the receiving module is used to receive the echo signal corresponding to the detection signal. The LiDAR further includes a control module and the data processing module. The control module and the data processing module are coupled to the transmitting module and the receiving module. The data processing module is used to process the electrical signal output by the receiving module to obtain point cloud data or detection information of the LiDAR (e.g., distance information or reflectivity information of the target object).

Furthermore, the LiDAR may also include a scanning device, which can be a rotating mirror, a oscillating mirror, a galvanometer mirror, a prism, or any combination thereof.

The receiving module can be a receiving unit. The receiving unit can be a SPAD (Single-Photon Avalanche Diode). Then, in some implementations, when the receiving module is a single receiving unit, the specific process of determining a plurality of received data items based on the echo signal received by the receiving module includes: determining a plurality of received data items based on a plurality of echo signals received by the receiving unit. The plurality of echo signals can be obtained by a single transmitting module emitting laser pulses at different times and reflected by the target object, or by multiple transmitting modules emitting laser pulses at different times and reflected by the target object. The present application does not impose a unique limitation on whether the transmitting units corresponding to the multiple echoes received by the receiving unit are the same transmitting unit. Each time a receiving unit receives an echo signal, it outputs an electrical signal. Therefore, when a receiving unit receives echo signals at multiple times (i.e., receives multiple echo signals), it can output multiple electrical signals. After receiving the multiple electrical signals, the data processing module can determine multiple received data items based on these electrical signals. The data processing module can determine one received data item based on one electrical signal, or determine one received data item based on multiple electrical signals, which can be set according to the actual application scenario.

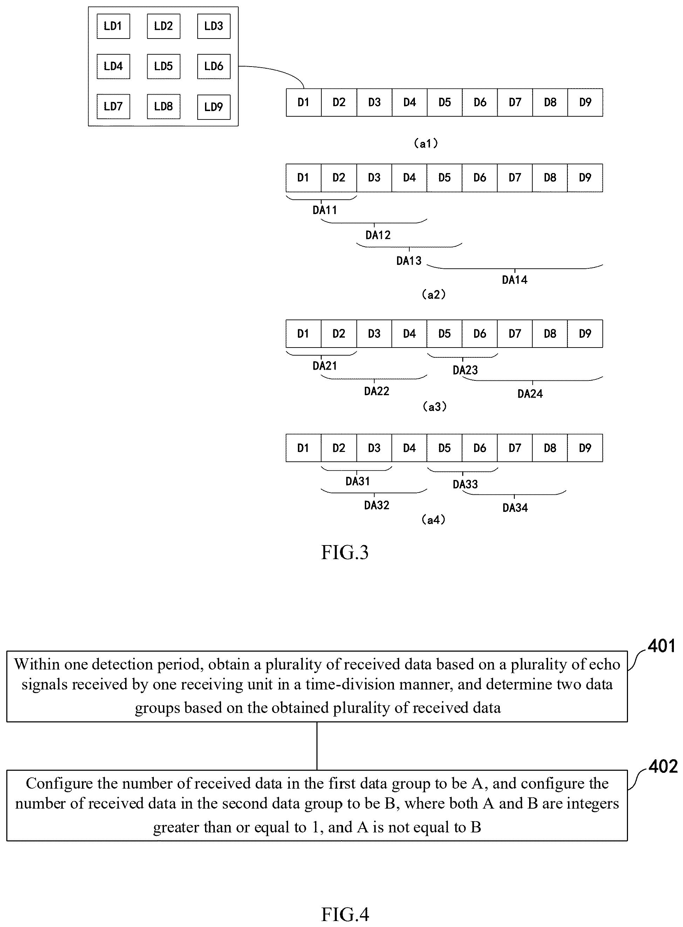

In some implementations, the receiving module can be a receiving array. The receiving array can include a plurality of receiving units. Specifically, the receiving array can be a SPAD array or a SiPM (Silicon Photomultiplier). Taking the receiving module as a SPAD array as an example, the SPAD array includes a plurality of SPAD units. Integrating multiple SPAD units into a two-dimensional array forms a SPAD surface array. As an example, as shown in part (a1) of FIG. 3, the receiving array includes 9 receiving units, namely receiving units D1 to D9. Optionally, each receiving unit can include a plurality of pixels. As shown in FIG. 3 (a1), D1 includes 9 pixels (e.g., LD1-LD9). It can be understood that the number of pixels included in D1 and the arrangement of the pixels are not uniquely limited. For example, the multiple pixels can be arranged in a square or a circle, etc. The present application does not impose unique limitations on this. Then, in some implementations, when the receiving module is a receiving array, the specific process of determining a plurality of received data items based on the echo signal received by the receiving module includes: determining one received data item based on an echo signal received by each receiving unit or each receiving unit group in the receiving array, thereby obtaining a plurality of received data items based on the receiving array; wherein the receiving array comprises a plurality of receiving units or a plurality of receiving unit groups; each receiving unit group comprises at least one receiving unit. The data processing module is coupled to the receiving array. The data processing module can determine one received data item based on one electrical signal, or determine one received data item based on two or more electrical signals, which can be set according to the actual application scenario.

It can be understood that when the receiving module is a receiving array, the receiving module can determine multiple received data items based on one echo or based on multiple echoes. As an example, when the receiving array determines multiple received data items based on one echo, it specifically includes: when the divergence angle of an echo laser from a transmitted laser covers multiple receiving units or multiple receiving unit groups (i.e., in system design, one transmitting unit corresponds to multiple receiving units or multiple receiving unit groups), then this one echo can be received by multiple receiving units, so one echo can correspond to multiple received data items. As another example, when the receiving array determines multiple received data items based on multiple echoes, it specifically includes: when the divergence angle of an echo laser from a transmitted laser covers one receiving unit or one receiving unit group (i.e., in system design, one transmitting unit corresponds to one receiving unit or one receiving unit group), then this one echo is received by one receiving unit, so one echo corresponds to one received data item, and multiple echoes determine multiple received data items. It can be understood that whether the receiving module determines multiple received data items based on one echo or multiple echoes is related to the correspondence between the transmitting units in the transmitting module and the receiving units in the receiving module. When one transmitting unit corresponds to multiple receiving units, one echo can determine multiple received data items; when one transmitting unit corresponds to one receiving unit, one echo can determine one received data item, and multiple echoes are needed to obtain multiple received data items.

In some implementations, the transmitting module is a VCSEL (Vertical-Cavity Surface-Emitting Laser) array or a VCSEL unit. Optionally, the transmitting module can also be an EEL (Edge-Emitting Laser) array or an EEL unit. The present application does not impose unique limitations on the specific type of transmitting units included in the transmitting module.

The present application does not impose unique limitations on the correspondence between the transmitting module and the receiving module. Specifically, for example: one transmitting module is used to emit detection laser light, and one receiving module is used to receive the echo signal; or, one transmitting module is used to emit detection laser light, and multiple receiving modules are used to receive the echo signal; or, multiple transmitting modules are used to emit detection laser light, and one receiving module is used to receive the echo signal; or, multiple transmitting modules are used to emit detection laser light, and multiple receiving modules are used to receive the echo signal.

In each application scenario, the specific transmission method of the transmitting module (e.g., multiple transmitting modules emitting detection laser light simultaneously or sequentially) and the specific reception method of the receiving module (e.g., multiple receiving modules receiving echo laser light simultaneously or sequentially; or all receiving units in the receiving module receiving the echo signal simultaneously or partially receiving units receiving the echo signal) can be set according to the actual application scenario. The embodiments of the present application do not impose specific limitations on this. For example, in some specific implementations, for a scenario where the transmitting module includes multiple transmitting units and each transmitting unit corresponds to a group of receiving units, the multiple transmitting units of the transmitting module can be driven to emit laser light in a time-division manner, but the receiving units of the receiving array receive echoes simultaneously. In other specific implementations, for a scenario where multiple transmitting modules are used to emit detection laser light and one receiving module is used to receive the echo signal, the multiple transmitting modules emit detection laser light simultaneously, and different receiving units in the receiving module receive the echo signal in a time-division manner. In other specific implementations, for a scenario where the transmitting module includes multiple transmitting units and each transmitting unit corresponds to one receiving unit group, each transmitting unit and its corresponding receiving unit group can be activated simultaneously.

Specifically, the transmitting module can emit pulsed detection laser light. The detection laser light is projected onto the target object and reflected by the target object; the signal reflected by the target object is the echo signal. The receiving units in the receiving array receive the echo signal and generate received data items. For ease of description, in the embodiment of the present application, the receiving module is taken as a receiving array, and all receiving units in the receiving array receive the echo signal as an example. The data processing module acquires the received data items and processes them to obtain the distance to the target object.

In some embodiments, when the receiving module is a receiving array, the specific process of determining a plurality of received data items based on the echo signal received by the receiving module includes: determining one received data item based on an echo signal received by each receiving unit or each receiving unit group in the receiving array, thereby obtaining a plurality of received data items based on the receiving array; wherein the receiving array comprises a plurality of receiving units or a plurality of receiving unit groups; each receiving unit group comprises at least one receiving unit, etc.

Specifically, taking a receiving array including J receiving units as an example, J is an integer greater than or equal to 1. When a receiving array corresponds to an echo signal of a detection laser, each time the receiving array receives an echo signal, each receiving unit outputs one received data item, so the receiving array outputs a total of J received data items. The data processing module receives the received data items output by each receiving unit. As an example, as shown in part (a1) of FIG. 3, the receiving array includes 9 receiving units, namely receiving units D1 to D9, and 9 received data items can be determined corresponding to one echo signal. Specifically, when the receiving array receives one echo signal, received data items DA1 can be determined based on receiving unit D1 receiving the echo signal; received data item DA2 can be determined based on receiving unit D2 receiving the echo signal; received data item DA3 can be determined based on receiving unit D3 receiving the echo signal; received data item DA4 can be determined based on receiving unit D4 receiving the echo signal; received data item DA5 can be determined based on receiving unit D5 receiving the echo signal; received data item DA6 can be determined based on receiving unit D6 receiving the echo signal; received data item DA7 can be determined based on receiving unit D7 receiving the echo signal; received data item DA8 can be determined based on receiving unit D8 receiving the echo signal; received data item DA9 can be determined based on receiving unit D9 receiving the echo signal.

As another example, taking a receiving array including J receiving units as an example, J is an integer greater than or equal to 1. The J receiving units determine K receiving unit groups. Each time the receiving array receives an echo signal, each receiving unit group outputs one received data item, so the data processing module can obtain K received data items. Here, J and K are integers greater than or equal to 1.

In some embodiments, the specific process of determining a plurality of received data based on the echo signal received by the receiving module in step 201 includes: determining one received data item based on one echo signal received by each receiving unit group in the receiving array, wherein the receiving array includes at least one receiving unit group, and each receiving unit group includes at least one receiving unit. Specifically, the number of the plurality of received data items is related to the number of receiving unit groups that are enabled. It can be understood that in the embodiments of the present application, the receiving units capable of outputting electrical signals are those that have received the echo signal and are enabled.

The number of receiving units included in each receiving unit group can be one or multiple. Specifically, for example, each receiving unit group can include 3 receiving units, 4 receiving units, 9 receiving units, etc.

The number of receiving units corresponding to each received data item can be the same or different. For example, one received data item can be determined based on two receiving units, or based on three receiving units. For example, as shown in part (a1) of FIG. 3, the receiving array includes 9 receiving units. When the receiving array receives one echo signal, D1 and D2 can be enabled simultaneously for reception, and the received data items of D1 and D2 can be superimposed and output as one received data item to the data processing module. Optionally, D1, D2, and D3 can be enabled simultaneously for reception, and the received data items of D1, D2, and D3 can be superimposed and output as one received data item to the data processing module.

Furthermore, for each echo signal received by the receiving array, multiple received data can be determined based on all receiving units in the receiving array, or based on part of the receiving units in the receiving array. The specific selection of which receiving units to use for determining the multiple received data items can be set according to the actual application scenario. For example, as shown in part (a1) of FIG. 3, when the receiving array receives one echo signal, multiple received data items can be determined based on all receiving units in the receiving array (including receiving units D1 to D9); or multiple received data items can be determined based on part of the receiving units in the receiving array (e.g., receiving units D2 to D5).

Additionally, when determining one received data item based on the received data output by multiple receiving units each time, the one received data item can be determined by methods such as taking the average, median, maximum, or minimum value of the received data output by the multiple receiving units (the embodiments of the present application do not impose specific limitations on this).

Step 202: Based on the plurality of received data items, determine N data groups, wherein each data group includes at least one received data item, and among the N data groups, there are two data groups having at least partially identical received data items, N being an integer greater than or equal to 2.

Step 203: Based on the received data items of each data group among the N data groups, determine a distance measurement result corresponding to each data group.

The number N of received data items in each data group can be set based on the actual application scenario, and the embodiments of the present application do not impose specific limitations on this. The scenario where there are two data groups having at least partially identical received data items among the N data groups includes: only two data groups among the N data groups have at least partially identical received data items, while the other data groups do not have identical received data items; or, three or more data groups among the N data groups have at least partially identical received data items; or, all data groups among the N data groups have at least partially identical received data items.

For example, as shown in part (a2) of FIG. 3, when the receiving array receives one echo signal, based on the 9 receiving units (D1-D9) receiving the echo signal, 9 received data items can be determined, namely received data items DA1, DA2, DA3, DA4, DA5, DA6, DA7, DA8, and DA9. At this time, the obtained 4 data groups (N=4) are data group DA11, data group DA12, data group DA13, and data group DA14. Data group DA11 includes received data DA1 and DA2; data group DA12 includes received data items DA2, DA3, and DA4; data group DA13 includes received data items DA3, DA4, and DA5; data group DA14 includes received data items DA5, DA6, DA7, DA8, and DA9. Data group DA11 and data group DA12 have one identical received data item (i.e., DA2); data group DA12 and data group DA13 have two identical received data items (i.e., DA3 and DA4); data group DA13 and data group DA14 have one identical received data item (i.e., DA5).

It can be understood that the rules for determining the data groups by the data processing module can be pre-stored in the radar system according to the application scenario or system settings. Optionally, the rules can also be set by the radar system based on the results of the previous frame scan. The present application does not impose a unique limitation on this.

The rules for establishing data groups are mainly related to detection accuracy requirements and energy consumption requirements. For example, based on the detection requirements of different regions of the radar's field of view, rules for determining data groups can be established. It can be understood that for the central field of view or the target field of view of the radar, each data group can include more data items and/or the overlap between adjacent data groups can be higher (i.e., adjacent data groups can include more identical data items) and/or the total number of data groups corresponding to the central field of view or target field of view can be larger. It can be understood that a data group including more data items has a wider dynamic range for detection, and the detection result output by each data group is more accurate; adjacent data groups including more identical data items indicate a higher angular resolution of the points included in the adjacent data groups, which can improve detection accuracy; a larger total number of data groups in the region corresponding to the central field of view or target field of view means that the region includes more points, resulting in a higher point cloud density, which can improve the detection accuracy of that region.

In this embodiment, when determining the distance measurement results through data groups DA11, DA12, DA13, and DA14, by establishing data groups with different amounts of data items, data groups requiring high detection accuracy in the central field of view can have more received data items for calculation, which is beneficial for improving the echo signal-to-noise ratio (SNR), thereby enhancing the distance measurement capability. Here, the echo SNR represents the ratio of the received target echo signal strength to the background noise strength. Improving the echo SNR makes the target signal stronger relative to the background noise, making it easier to detect and process, thus improving the distance measurement capability. Meanwhile, in the above distance measurement process, there is no need to adjust the transmission power of the transmitting module or the detection efficiency of the receiving module, which avoids higher costs, is easy to implement, has strong application flexibility, and can more effectively improve the distance measurement capability.

It can be understood that part (a2) of FIG. 3 only exemplarily shows one way of determining the N data groups. In other embodiments, other determination methods can also be adopted.

For example, as shown in part (a3) of FIG. 3, when the receiving array receives one echo signal, based on the 9 received data items determined by the 9 receiving units (D1-D9) receiving the echo signal, the obtained 4 data groups (N=4) are data group DA21, data group DA22, data group DA23, and data group DA24. Data group DA21 includes received data items DA1 and DA2; data group DA22 includes received data items DA2, DA3, and DA4; data group DA23 includes received data items DA5 and DA6; data group DA24 includes received data items DA6, DA7, DA8, and DA9. Data group DA21 and data group DA22 have one identical received data item (i.e., DA2); data group DA23 and data group DA24 have one identical received data item (i.e., DA6). In this example, DA21 and DA22 include identical data items, DA23 and DA24 have identical data items, but DA22 and DA23 do not have identical data items. By setting the number of identical data items between adjacent data groups, the distance measurement capability can be improved while accommodating computational resource requirements, allowing flexible configuration of detection data output according to needs.

In summary, for two data groups, the number of identical received data items between them can be zero (e.g., data group DA22 and data group DA23), one (e.g., data group DA21 and data group DA22), or multiple (e.g., data group DA12 and data group DA13). The specific number can be set based on actual application requirements. Specifically, when the amount of data items included in two data groups is similar, more identical data items between the two data groups results in higher angular resolution of the output point cloud, improving detection accuracy. When the first data group has a larger amount of data items than the second data group, and the first data group includes all the data items of the second data group, the dynamic range of different data groups can be adjusted by the different amounts of data items included in different data groups, thereby adjusting the detection accuracy corresponding to different data groups. For any two different data groups, the number of identical received data items in each group can be the same or different. For example, if data groups DA21 and DA22 have one identical received data item, then for these two data groups, the number of identical received data items is the same; another example, if data groups DA21 and DA22 have one identical received data item, and data groups DA12 and DA13 have two identical received data items, then for these two pairs of adjacent data groups, the number of identical received data items is different. Furthermore, the N data groups can be determined based on all received data items among the multiple received data items, or based on part of the received data items among the multiple received data items. For example, as shown in parts (a2) or (a3) of FIG. 3, 4 data groups are determined based on all 9 received data items; or as shown in part (a4) of FIG. 3, 4 data groups are determined based on only part of the 9 received data items (i.e., received data items D2 to D8), where data group DA31 includes received data items DA2 and DA3; data group DA32 includes received data items DA2, DA3, and DA4; data group DA33 includes received data items DA5 and DA6; data group DA34 includes received data items DA6, DA7, and DA8.

Additionally, in practical applications, the number of identical received data items shared by two data groups can be increased or decreased according to actual needs. For example, by increasing the number of identical received data items shared by two data groups, such as in a specific embodiment, if the number of identical received data items shared by data group DA12 and data group DA13 in part (a2) of FIG. 3 is increased from two (data items DA3 and DA4) to three (data items DA2, DA3, and DA4), then data group DA13 is calculated with 4 data items instead of 3, which is beneficial for improving the distance measurement capability. By reducing the number of identical received data items shared by two adjacent data groups according to detection requirements, the computational resources of the data processing module can be saved.

In some embodiments, as shown in FIG. 4, the distance measurement method further includes the following steps:
Step 401: Within one detection period, obtain a plurality of received data items based on a plurality of echo signals received by one receiving unit in a time-division manner, and determine two data groups based on the obtained plurality of received data items.
Step 402: Configure the number of received data items in the first data group to be A, and configure the number of received data items in the second data group to be B, where both A and B are integers greater than or equal to 1, and A is not equal to B.

As an example, one receiving unit receives one echo signal and outputs one electrical signal. When the receiving unit receives multiple echo signals in a time-division manner within one detection period, it can output multiple electrical signals. As an example, each electrical signal can be taken as one received data item and input to the data processing module. The data processing module then determines two data groups from the multiple received data items; the numbers of received data items in these two data groups are A and B respectively, and A is not equal to B, meaning A is greater than B or A is less than B.

Taking A less than B as an example, one receiving unit can receive a total of B echoes. The first A echoes can be taken as the first data group, and all B echoes can be taken as the second data group. Data superposition calculation is performed based on the first data group to obtain the detection information corresponding to the first data group. Data superposition calculation is performed based on the second data group to obtain the detection information corresponding to the second data group. It can be understood that the second data group includes more echo information, so superposition calculation based on the second data group enables longer-distance detection. The first data group includes less echo information, so the first data group can be used for short-distance detection. Thus, through this process, alternating measurement of long and short distances can be achieved. Moreover, in this process, strong distance measurement capability can be achieved for long-distance measurement, while lower power consumption (due to saving computational resources of the data processing module) and higher accuracy can be achieved for short-distance testing.

It can be understood that the multiple echo information corresponding to one receiving unit can be divided into more data groups, such as 3, 4, or 5 data groups. The number of data groups included in the echo information corresponding to the receiving unit is positively correlated with the application requirements. The more application requirements the receiving unit needs to meet, the more data groups it corresponds to; simultaneously, the more data groups it corresponds to, the more flexible the detection.

It can be understood that, as an example, the transmission signals corresponding to the multiple echoes received by the receiving unit have different powers.

The transmission signals corresponding to the multiple echoes received by one receiving unit can have different transmission powers. It can be understood that the transmission powers of the transmission signals corresponding to the multiple echoes can be completely different or partially the same. As an example, the transmitting unit can be controlled to emit C transmission signals at a first power and D detection signals at a second power, where C and D can be equal, or C can be less than D, or C can be greater than D. The specific values of C and D are related to the detection requirements of the radar. The echo signals corresponding to the signals emitted by the transmitting unit can be divided into two data groups. The transmitting unit emits detection signals, which are received by its corresponding receiving unit or receiving unit group. Then the receiving unit or receiving unit group outputs multiple electrical signals after receiving the corresponding echo signals. As an example, each electrical signal can be taken as one received data item and input to the data processing module. The data processing module then determines two data groups from the multiple received data items; the numbers of received data items in these two data groups are E and F respectively. It can be understood that the E signals corresponding to the first data group can be at the first power, and the F signals corresponding to the second data group can include echo signals at the first power and the second power. When the first power is less than the second power, the first data group achieves superposition of multiple detection signals at low power, enabling short-distance detection. The second data group includes multiple detections at low and high powers. Therefore, by superimposing echoes of different transmission powers, measurements with different dynamic ranges can be achieved, resulting in higher accuracy for long-distance measurements. Thus, by grouping and superimposing the multiple echo signals received by the receiving unit, more detection information can be obtained. As an example, the laser signals emitted by the transmitting unit can include multiple transmission powers. The number of detection data included in the first data group is less than that in the second data group. It can be understood that a data group including more echoes has a wider dynamic range for detection. Therefore, by adjusting the number of echoes included in different data groups, different detection requirements can be met.

It can be understood that when the LiDAR includes multiple receiving units, i.e., the LiDAR includes a receiving array, the number of transmissions and the transmission strategy of the transmitting unit corresponding to the receiving unit are determined based on the position of the receiving unit in the receiving array. Simultaneously, the number of groups for the echo signals received by the receiving unit is determined based on its position in the receiving array. For example, when the receiving unit corresponds to the edge field of view of the radar, the echo data corresponding to this receiving unit can be divided into 1 data group to reduce the computational load of the data processing module, thereby reducing energy consumption. When the detection field of view corresponding to the receiving unit is the central field of view of the radar, the echo data corresponding to this receiving unit can be divided into at least two data groups, thereby improving the detection accuracy of the central field of view while saving computational resources. As an example, if the radar's vertical field of view is -15° to 15°, and the horizontal field of view is -60° to 60°, then the vertical edge field of view can be, for example, -15° to -10° and/or 10° to 15°, and the vertical central field of view can be -10° to 10°. The horizontal edge field of view can be, for example, -60° to -50° and/or 50° to 60°, and the horizontal central field of view can be - 50° to 50°.

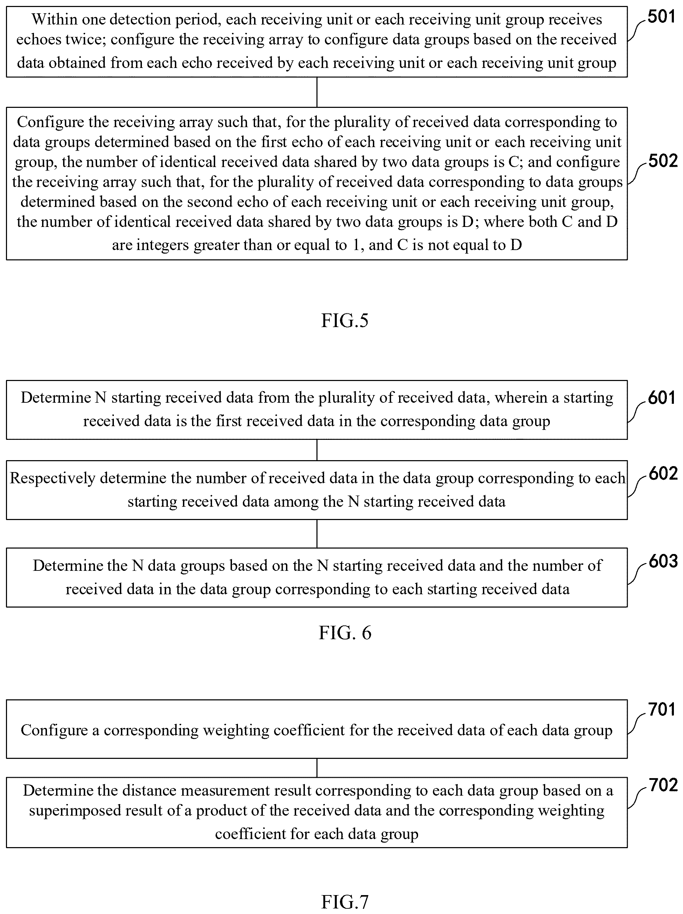

In some embodiments, as shown in FIG. 5, the distance measurement method further includes the following steps:
Step 501: Within one detection period, each receiving unit or each receiving unit group receives echoes twice; configure the receiving array to configure data groups based on the received data item(s) obtained from each echo received by each receiving unit or each receiving unit group.

It can be understood that each receiving unit group can include at least one receiving unit, for example, each receiving unit group can include 2, 3, 4, or 9 receiving units, etc. Specifically, the present application does not impose specific limitations on this. It can be understood that when each receiving unit group receives an echo, the entire receiving unit group can be activated simultaneously to receive the echo signal, convert it into an electrical signal, and output one received data item as a whole to the data processing module. Optionally, when each receiving unit group receives an echo, part of it can be enabled to obtain the echo signal, determine one received data item, and output it to the data processing module. The specific enabling rules can be based on the spot offset amount. The present application does not impose unique limitations on the partial enabling rules for each receiving module group.

Step 502: Configure the receiving array such that, for the plurality of received data items corresponding to data groups determined based on the first echo of each receiving unit or each receiving unit group, the number of identical received data items shared by two data groups is C; and configure the receiving array such that, for the plurality of received data items corresponding to data groups determined based on the second echo of each receiving unit or each receiving unit group, the number of identical received data items shared by two data groups is D; where both C and D are integers greater than or equal to 1, and C is not equal to D.

The aforementioned two echo signals can be emitted by the same transmitting module or different transmitting modules. Taking each receiving unit or each receiving unit group corresponding to one transmitting unit group as an example, the transmitting unit group includes multiple transmitting units. Each transmitting unit group can be fully enabled or partially enabled during each emission. Specifically, for example, during the first emission, part of the transmitting units in the transmitting unit group are enabled. During the second emission, all transmitting units in the transmitting unit group are enabled. By setting different numbers of enabled transmitting units for each emission, the energy of the emitted laser for each emission can be adjusted to adapt to different application requirements. For example, use low power for short-distance emission and high power for long-distance emission.

The two echo signals can correspond to different transmission powers. For example, the first corresponds to low-power emission for short-distance detection; the second corresponds to high-power emission for long-distance detection.

The receiving array determines multiple received data items based on the first echo corresponding to each receiving unit or each receiving unit group. It can be understood that each received data items is an electrical signal output by one receiving unit or one receiving unit group after receiving the echo signal. The number of received data items determined by the receiving array corresponds to the number of receiving units or receiving unit groups in the receiving array. The receiving array can output the corresponding received data items to the data processing module in a time-division manner based on the time when each receiving unit or each receiving unit group receives the echo. Optionally, the receiving array can also output all received data items to the data processing module simultaneously. The present application does not impose unique limitations on this. The data processing module configures the multiple received data items determined by the first echo received by the receiving array into multiple data groups according to preset rules. The number of identical received data items shared by two data groups among the multiple data groups is C. It can be understood that the number of identical received data items shared by any adjacent data groups in the data groups can be set to C, or only some adjacent data groups can have the same number of identical received data items set to C. The present application does not impose unique limitations on this.

The receiving array determines multiple received data items based on the second echo corresponding to each receiving unit or each receiving unit group. It can be understood that each received data items is an electrical signal output by one receiving unit or one receiving unit group after receiving the echo signal. The number of received data items determined by the receiving array corresponds to the number of receiving units or receiving unit groups in the receiving array. The receiving array can output the corresponding received data items to the data processing module in a time-division manner based on the time when each receiving unit or each receiving unit group receives the second echo. Optionally, the receiving array can also output all received data items to the data processing module simultaneously. The present application does not impose unique limitations on this. The data processing module configures the multiple received data items determined by the second echo received by the receiving array into multiple data groups according to preset rules. The number of identical received data items shared by two data groups among the multiple data groups is D. It can be understood that the number of identical received data items shared by any adjacent data groups in the data groups can be set to D, or only some adjacent data groups can have the same number of identical received data items set to D. The present application does not impose unique limitations on this.

As an example, both C and D are integers greater than or equal to 1, and C is not equal to D, meaning C is greater than D or C is less than D.

Taking C less than D as an example, for the multiple received data items determined from the first echo, the two adjacent data groups corresponding to these received data items are, for example, data group DA21 and data group DA23 as shown in part (a3) of FIG. 3. Here, there are no identical received data items between data group DA21 and data group DA23, so C is 0. For the multiple received data items determined from the second echo, the two adjacent data groups are, for example, data group DA21 and data group DA22 as shown in part (a3) of FIG. 3. Here, the number of identical received data items between data group DA21 and data group DA22 is 1, so D is 1. Relatively speaking, the multiple received data items determined from the second echo correspond to data groups where the adjacent data groups have more identical received data items, resulting in higher angular resolution of the point cloud data items determined by the adjacent two received data groups, stronger distance measurement capability, and suitable for long-distance measurement scenarios. The multiple received data items determined from the first echo correspond to data groups where the adjacent data groups have fewer identical received data items, resulting in larger relative angular intervals between the point clouds corresponding to the adjacent data groups, suitable for short-distance measurement scenarios. Thus, through this process, by setting the radar system to emit twice within one detection period, with different processing and output methods for the received data items corresponding to each emission, the accuracy requirements for both long and short distances can be met while reducing the overall system energy consumption. In this process, strong distance measurement capability can be achieved for long-distance measurement, while lower energy consumption (due to saving computational resources of the data processing module) can be achieved for short-distance testing.

In some embodiments, for scenarios where the receiving module is a receiving array, the steps shown in FIG. 4 and the steps shown in FIG. 5 can be performed simultaneously. That is, first perform the steps in FIG. 4 for the receiving units or receiving unit groups in the receiving array, then perform the steps in FIG. 5 for the receiving array. This simultaneously achieves superposition of multiple echoes received by the receiving units to improve the detection accuracy of the receiving units, and achieves the data superposition process of the receiving array to improve the detection accuracy of the receiving array, thereby further enhancing the distance measurement capability and accuracy of the radar system.

In some embodiments, as shown in FIG. 6, the specific process of determining N data groups based on the plurality of received data items in step 202 includes:
Step 601: Determine N starting received data items from the plurality of received data items, wherein a starting received data item is the first received data items in the corresponding data group.
Step 602: Respectively determine the number of received data items in the data group corresponding to each starting received data item among the N starting received data items.
Step 603: Determine the N data groups based on the N starting received data items and the number of received data items in the data group corresponding to each starting received data item.

Using part (a2) of FIG. 3 as an example for explanation. First, when the receiving array receives one echo signal, based on the 9 receiving units (D1-D9) receiving the echo signal, 9 received data items can be determined (received data items DA1, DA2, DA3, DA4, DA5, DA6, DA7, DA8, and DA9). Based on 4 starting received data items among the 9 received data items, the 4 starting received data items are respectively received data items DA1, DA2, DA3, and DA5. Simultaneously, determine that the number of received data items to be acquired starting from the first starting data item (i.e., received data item DA1) is two, thus determining data group DA11; determine that the number of received data items to be acquired starting from the second starting data item (i.e., received data item DA2) is three, thus determining data group DA12; determine that the number of received data items to be acquired starting from the third starting data item (i.e., received data item DA3) is three, thus determining data group DA13; determine that the number of received data items to be acquired starting from the fourth starting data item (i.e., received data item DA5) is five, thus determining data group DA14.

The starting received data can be determined based on the coordinates of the receiving unit or receiving unit group; alternatively, they can be determined based on the correspondence between the reception time and the receiving unit or receiving unit group; optionally, they can also be determined based on the transmission time and the correspondence between the transmitting unit and the receiving unit or receiving unit group. The present application does not impose unique limitations on this.

Then, start acquiring received data items from the first starting data item, and count the number of received data items. The count value starts from 0 and increments by 1 for each additional received data item. When the amount of received data items equals the amount of data items included in the data group determined by the data processing module, the data group is determined, and the data items of this data group is processed to output the corresponding point cloud data or detection information. Simultaneously, acquire the starting data item of the next data group, start acquiring received data items from this next starting data item, count the number of received data items, determine the next data group, and so on until all data groups are determined.

Using part (a2) of FIG. 3 as an example, determine the starting unit D1, acquire the received data item DA1 received by D1, and count the subsequently acquired received data items. When the count value is 2, the counting for this data group ends, and data group DA11 is determined. Thus, data group DA11 includes received data items DA1 and DA2. Start acquiring received data items from the second starting data item DA2, and count the number of received data items. The count value starts from 0 and increments by 1 for each additional received data item. When the count value is 3, counting ends, and data group DA12 is determined. Thus, data group DA12 includes received data items DA2, DA3, and DA4. Start acquiring received data items from the third starting data item, and count the number of received data items. The count value starts from 0 and increments by 1 for each additional received data item. When the count value is 3, counting ends, and data group DA13 is determined. Thus, data group DA13 includes received data items DA3, DA4, and DA5. Start acquiring received data items from the fourth starting data item, and count the number of received data items. The count value starts from 0 and increments by 1 for each additional received data item. When the count value is 5, counting ends, and data group DA14 is determined. Thus, data group DA14 includes received data items DA5, DA6, DA7, DA8, and DA9. At this point, the determination process for each data group is completed.

Using part (a3) of FIG. 3 as another example for explanation. First, when the receiving array receives one echo signal, based on the 9 receiving units (D1-D9) receiving the echo signal, 9 received data items can be determined (received data items DA1, DA2, DA3, DA4, DA5, DA6, DA7, DA8, and DA9). Determine 4 starting received data items from the 9 received data items. As an example, the 4 starting received data items are respectively received data items DA1, DA2, DA5, and DA6. Simultaneously, acquire the number of received data items corresponding to each starting received data item. As an example, determine that the number of received data to be acquired starting from the first starting data item (i.e., received data item DA1) is two; determine that the number of received data items to be acquired starting from the second starting data item (i.e., received data item DA2) is three; determine that the number of received data items to be acquired starting from the third starting data item (i.e., received data item DA5) is two; determine that the number of received data items to be acquired starting from the fourth starting data item (i.e., received data item DA6) is four.

Then, start acquiring received data items from the first starting data item, and count the number of received data items. The count value starts from 0 and increments by 1 for each additional received data item. When the count value is 2, counting ends, and data group DA21 is determined. Thus, data group DA21 includes received data items DA1 and DA2. Start acquiring received data items from the second starting data item, and count the number of received data. The count value starts from 0 and increments by 1 for each additional received data item. When the count value is 3, counting ends, and data group DA22 is determined. Thus, data group DA22 includes received data items DA2, DA3, and DA4. Start acquiring received data items from the third starting data item, and count the number of received data items. The count value starts from 0 and increments by 1 for each additional received data item. When the count value is 2, counting ends, and data group DA23 is determined. Thus, data group DA23 includes received data items DA5 and DA6. Start acquiring received data items from the fourth starting data item, and count the number of received data items. The count value starts from 0 and increments by 1 for each additional received data item. When the count value is 4, counting ends, and data group DA24 is determined. Thus, data group DA24 includes received data items DA6, DA7, DA8, and DA9. At this point, the determination process for each data group is completed.

In some embodiments, as shown in FIG. 7, the specific process of determining the distance measurement result corresponding to each data group based on the received data items of each data group among the N data groups in step 203 includes the following steps:
Step 701: Configure a corresponding weighting coefficient for each received data item of each data group.
Step 702: Determine the distance measurement result corresponding to each data group based on a superimposed result of products of the received data items and the corresponding weighting coefficients for each data group.

Taking data group DA11 in FIG. 3 as an example. Assume the superimposed result corresponding to data group DA11 is add11, then add11 = coe1 * D1 + coe2 * D2, where coe1 is the weighting coefficient corresponding to received data item D1, and coe2 is the weighting coefficient corresponding to received data item D2. The values of the weighting coefficients coe1 and coe2 can be set according to the actual application scenario or requirements. For example, in some implementations, they can be set based on whether the receiving unit is located in the center or the edge of the receiving array.

In some embodiments, an amplitude adjustment coefficient can be further set to adjust the weighting coefficients. Still using data group DA11 as an example, set add11 = (coe1 * D1 + coe2 * D2) * amp_coe, where amp_coe is the amplitude adjustment coefficient. Then, by adjusting the amplitude adjustment coefficient amp_coe, the final weighting coefficients used for the received data items D1 and D2 during superposition can be adjusted. By adjusting the amplitude adjustment coefficient amp_coe in real-time according to the actual situation, the distance measurement result can maintain high accuracy.

Additionally, in other embodiments, other methods can be used to superimpose the received data items in each data group. For example, a histogram method can be used, where the received data in any data group are represented in the form of histograms, and then the histograms corresponding to each received data items are superimposed. The resulting histogram is the superimposed result corresponding to that data group.

In some embodiments, the distance measurement method further includes the following step: based on the distance measurement result corresponding to the K-th data group, adjust the weighting coefficient corresponding to a received data item of the (K+1)-th data group, where K is an integer greater than or equal to 1 and less than or equal to N.

Specifically, based on the distance measurement result corresponding to the first data group, adjust the weighting coefficients corresponding to the received data items of the second data group; based on the distance measurement result corresponding to the second data group, adjust the weighting coefficients corresponding to the received data items of the third data group; ...; based on the distance measurement result corresponding to the (N-1)-th data group, adjust the weighting coefficients corresponding to the received data items of the N-th data group. Thus, the weighting coefficient for the next data group can be adjusted in real-time based on the current distance measurement result to maintain high accuracy of the distance measurement result.

Subsequently, based on the superimposed result corresponding to each data group, the distance measurement result corresponding to each data group can be determined. Specifically, first, based on the superimposed result corresponding to each data group, determine the echo duration corresponding to each data group, where the echo duration is the time from when the transmitting module emits the laser pulse to when the receiving array receives the corresponding echo signal. Then, combined with the speed of light and the echo duration corresponding to each data group, the distance measurement result corresponding to each data group can be calculated.

In some implementations, each receiving unit includes multiple pixels. Then, the received data items corresponding to the receiving unit can be determined based on the multiple pixels. When determining the received data items output by each receiving unit, the processing method for each pixel can also refer to the method shown in FIG. 1, i.e., dividing all pixels into multiple pixel combinations, each pixel combination including at least two pixels, and there are two pixel combinations among the multiple pixel combinations that have at least partially identical pixels; then determining the data items corresponding to each pixel combination based on the pixels in each pixel combination, and determining the received data items output by the receiving unit based on the data items corresponding to each pixel combination. In this case, part (a1) of FIG. 2 includes 9 receiving units, where receiving unit D1 includes 9 pixels. The subsequent specific implementation process can refer to the description of the above embodiments regarding FIGS. 1-6, which will not be repeated here. Through this method, more accurate received data items can be obtained.

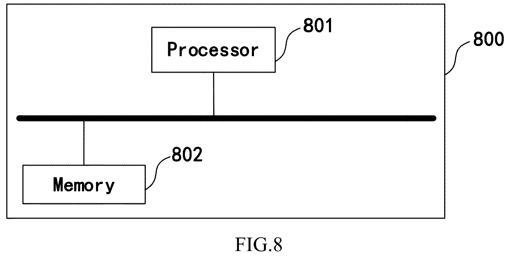

Please refer to FIG. 8, which is a schematic structural diagram of a data processing module according to an embodiment of the present application. As shown in FIG. 8, the data processing module 800 includes one or more processors 801 and a memory 802. In FIG. 8, one processor 801 is taken as an example.

The processor 801 and the memory 802 can be connected via a bus or other means. In FIG. 8, connection via a bus is taken as an example.

The memory 802, as a non-volatile computer-readable storage medium, can be used to store non-volatile software programs, non-volatile computer-executable programs, and modules. The processor 801 executes various functional applications and data processing of the terminal interaction device by running the non-volatile software programs, instructions, and modules stored in the memory 802, thereby implementing the distance measurement method described in the above method embodiments.

The memory 802 can include at least one disk storage device, flash memory device, or other non-volatile solid-state storage device. In some embodiments, the memory 802 includes a memory remotely located relative to the processor 801. These remote memories can be connected to the processor 801 via a network. Examples of such networks include, but are not limited to, the Internet, intranets, local area networks, mobile communication networks, and combinations thereof.

Program instructions/modules are stored in the memory 802. When executed by the one or more processors 801, they implement the distance measurement method in any of the above method embodiments, for example, executing the various steps described in FIGS. 2, 4-7.

The embodiments of the present application also provide a non-volatile computer-readable storage medium. The computer-readable storage medium stores computer-executable instructions. When the computer-executable instructions are executed, the distance measurement method in any embodiment of the present application is implemented.

The embodiments of the present application also provide a computer program product. The computer program product includes a computer program stored on a computer-readable storage medium. The computer program includes program instructions. When the program instructions are executed by a computer, the computer is caused to execute the distance measurement method in any embodiment of the present application.

The embodiments of the present application also provide an electronic device. The electronic device includes a transmitting module, a receiving module, and the data processing module 800 according to any embodiment of the present application. The transmitting module is used to emit laser pulses. The receiving module is used to determine a plurality of received data items based on echo signals of the laser pulses. The data processing module is electrically connected to the receiving module to acquire the received data items output by the receiving module and process the received data items to determine the distance to the target object.

In some embodiments, the electronic device is a LiDAR. The LiDAR can be applied to any device that requires laser detection, such as a car. The LiDAR can detect the distance and speed of the car relative to obstacles. The vehicle uses the LiDAR system to detect nearby moving or approaching obstacles, such as taller vehicles, roadside static objects, suddenly approaching aerial objects, etc., so that the vehicle can plan a path to avoid obstacles based on the detected information, thereby preventing collisions with obstacles. The vehicle can be an autonomous vehicle or an ordinary vehicle. The present application does not limit this.

In the description of the present application, it should be understood that terms such as "first" and "second" are used for descriptive purposes only and cannot be understood as indicating or implying relative importance. Those of ordinary skill in the art can understand the specific meanings of these terms in the present application based on the specific situation. Furthermore, in the description of the present application, unless otherwise specified, "a plurality" means two or more. "And/or" describes the relationship between associated objects, indicating that three relationships can exist. For example, A and/or B can mean: A exists alone, both A and B exist, and B exists alone. The character "/" generally indicates that the associated objects are in an "or" relationship.

The above are only embodiments of the present application and do not limit the patent scope of the present application. Any equivalent structure or equivalent process transformation made using the specification and drawings of the present application, or directly or indirectly applied in other related technical fields, shall similarly fall within the patent protection scope of the present application.

The above embodiments are only used to illustrate the technical solutions of the present application and not to limit them. Under the concept of the present application, technical features in the above embodiments or different embodiments can also be combined, and steps can be implemented in any order. Those of ordinary skill in the art should understand that they can still modify the technical solutions described in the foregoing embodiments or equivalently replace some of the technical features. However, these modifications or replacements do not cause the essence of the corresponding technical solutions to deviate from the scope of the technical solutions of the embodiments of the present application.

## Claims

1. A distance measurement method, applied to a data processing module coupled to a receiving module, the method comprising:
determining a plurality of received data items based on an echo signal received by the receiving module, wherein the echo signal is a signal reflected by a target object after a transmitting module emits a laser pulse toward the target object, and the plurality of received data items is determined based on an electrical signal output by the receiving module in response to the echo signal;
determining N data groups based on the plurality of received data items, wherein each data group includes at least one received data item, and among the N data groups, there are two data groups having at least partially identical received data items, N being an integer greater than or equal to 2; and
determining a distance measurement result corresponding to each data group based on the received data items of each of the N data groups.

2. The method according to claim 1, wherein the receiving module is a receiving array or a receiving unit; and
the determining a plurality of received data items based on the echo signal received by the receiving module comprises:
determining the plurality of received data items based on an echo signal received by the receiving array, or
determining the plurality of received data items based on a plurality of echo signals received by the receiving unit.

3. The method according to claim 2, wherein the determining the plurality of received data items based on an echo signal received by the receiving array comprises:
determining one received data item based on an echo signal received by each receiving unit or each receiving unit group in the receiving array, thereby determining a plurality of received data items based on the receiving array,
wherein the receiving array comprises a plurality of receiving units or a plurality of receiving unit groups, each receiving unit group comprising at least one receiving unit.

4. The method according to claim 3, wherein the method further comprises:
within one detection period, receiving by each receiving unit or each receiving unit group echoes twice;
configuring the receiving array such that, for a plurality of received data items corresponding to data groups determined based on a first echo of each receiving unit or each receiving unit group, a number of identical received data items shared by two data groups is C; and
configuring the receiving array such that, for a plurality of received data items corresponding to data groups determined based on a second echo of each receiving unit or each receiving unit group, a number of identical received data items shared by two data groups is D,
wherein C and D are integers greater than or equal to 1, and C is not equal to D.

5. The method according to claim 1, wherein the determining N data groups based on the plurality of received data items comprises:
determining N starting received data items from the plurality of received data items, wherein a starting received data item is a first received data item in a corresponding data group;
respectively determining a number of received data items in the data group corresponding to each of the N starting received data items; and
determining the N data groups based on the N starting received data items and the number of received data items in the data group corresponding to each starting received data item.

6. The method according to claim 1, wherein the determining a distance measurement result corresponding to each data group based on the received data items of each of the N data groups comprises:
configuring a corresponding weighting coefficient for each received data item of each data group; and
determining the distance measurement result corresponding to each data group based on a superimposed result of products of the received data items and the corresponding weighting coefficients for each data group.

7. The method according to claim 6, wherein the method further comprises:
adjusting a weighting coefficient corresponding to a received data item of a (K+1)-th data group based on a distance measurement result corresponding to a K-th data group, wherein K is an integer greater than or equal to 1 and less than or equal to N.

8. A data processing module, comprising:
at least one processor and a memory,
wherein the memory is coupled to the at least one processor, and is configured to store instructions or a program which, when executed by the at least one processor, cause the at least one processor to execute the method according to any one of claims 1-7.

9. An electronic device, comprising:
a transmitting module, configured to emit a laser pulse;
a receiving module, configured to determine a plurality of received data items based on an echo signal of the laser pulse; and
the data processing module according to claim 8.

10. A computer storage medium, wherein the computer storage medium stores instructions or a program which, when executed by at least one processor, cause the at least one processor to execute the method according to any one of claims 1-7.
